# EUROPEAN PATENT APPLICATION

(11) **EP 4 711 098 A1**
(43) Date of publication of application: **18.03.2026**
(21) Application number: 23936673.5
(22) Date of filing: 09.05.2023
(51) Int. Cl.: B25J 11/00, B25J 5/00, B25J 9/00, B25J 9/16, B25J 13/08, B25J 19/00

(54) **DELIVERY ROBOT**

(71) Applicant: Bear Robotics Korea, Inc., Seoul 04779 (KR)
(72) Inventor: HAN, Jongbeom, Seoul 06772 (KR); IM, Sanghyuk, Seoul 06772 (KR); SHIN, Jiyong, Seoul 06772 (KR); CHEON, Jeeyoung, Seoul 06772 (KR)
(74) Representative: Murgitroyd & Company
(86) International application number: PCT/KR2023/006252
(87) International publication number: WO 2024/232449

(57) **Abstract**

This delivery robot may comprise: a lower plate configured to be fixed to the delivery robot; an upper plate configured to support items placed thereon; a damper spring fixed to the lower plate; and an adjusting plate coupled to an end of the damper spring and configured to adjust the damping of the damper spring. The adjusting plate is formed as an inclined surface, and thus the distance between the center of the damper spring and the adjusting plate can be made different at a center point and an end point. The upper plate can move at a different inclination angle relative to the lower plate according to the distance between the center of the damper spring and the adjusting plate.

## Description

### TECHNICAL FIELD

The present disclosure relates to a delivery robot that performs indoor and outdoor deliveries, and a serving robot used in restaurants. In particular, the present disclosure relates to a delivery robot capable of transporting goods using a tray structure.

### BACKGROUND

Competition for goods delivery in both online and offline markets is intensifying day by day. In order to provide better convenience to users, services that deliver purchased goods on the same day are also being offered.

Recently, unmanned mobile robots for transporting goods have been applied on the ground or in the air, and relevant regulations are gradually being established.

A robot may be a machine that automatically performs or operates a given task by its own capabilities. In particular, a robot that can recognize its environment and make autonomous decisions to perform actions may be referred to as an intelligent robot, and various services may be provided using such intelligent robots.

A delivery system using robots requires information such as maps and routes of the travel area in order to provide delivery services within the travel area. When such information is accumulated, the service can be established, enabling the robot to deliver goods to a destination.

In addition, in recent years, forms of daily logistics, such as deliveries from supermarkets, parcel logistics, and logistics transportation within buildings, have entered the scope of the traditional logistics industry. Such daily logistics require consideration of a structure that can transport goods in various forms without being restricted by the appropriate quantity of logistics, depending on different living environments.

In particular, when delivering various foods, such as dishes containing soup or coffee or water in cups, the delivery robot may spill liquids depending on the traveling environment, failing to meet customer needs.

### DISCLOSURE

### Technical Problem

The present disclosure is directed to providing embodiments that address the above-mentioned needs.

The present disclosure relates to a delivery robot that performs indoor and outdoor deliveries and a serving robot used in restaurants.

The present disclosure is intended to provide a delivery robot having a soup-spill prevention module having a tray structure.

The present disclosure is intended to provide a delivery robot having a soup-spill prevention module that prevents liquids from spilling when delivering various foods such as dishes containing soup or coffee or water in cups, depending on the traveling environment.

The present disclosure is intended to provide a delivery robot having a soup-spill prevention module capable of preventing soup overflow caused by vibrations when passing over obstacles, as well as by inertia generated during acceleration/deceleration.

The present disclosure is intended to provide a delivery robot having a soup-spill prevention module capable of preventing soup overflow issues even when the traveling speed is above a certain level, without reducing the traveling speed of the delivery robot.

### Technical Solution

The objects of the present disclosure can be achieved by providing a delivery robot may include a lower plate arranged to be fixed to the delivery robot, an upper plate arranged to support an item placed thereon, a damper spring fixed to the lower plate, and an control plate coupled to an end of the damper spring to control damping of the damper spring. The control plate may be provided with an inclined surface such that a distance between a center of the damper spring and the control plate may differ between a center point and an end point of the control plate. The upper plate may move at a different inclination angle with respect to the lower plate depending on the distance between the center of the damper spring and the control plate.

In one embodiment, the delivery robot may further include a first coupling portion coupled to a lower region of the upper plate, a first insertion portion inserted into first and second points of the first coupling portion and having a lower region connected thereto, and a second coupling portion coupled to the first coupling portion in one side region and an opposite side region of the first coupling portion.

In one embodiment, the delivery robot may further include a second insertion portion inserted into an inner region of the second coupling portion, and a third coupling portion disposed between the first insertion portion and the second insertion portion and having one side region and an opposite side region coupled to the second insertion portion.

In one embodiment, the second insertion portion may be coupled to the second coupling through side ball bearings in one side region and an opposite side region thereof. The side ball bearings may include an upper ball bearing in an upper region and a lower ball bearing in a lower region.

In one embodiment, the end of the damper spring may be coupled to the control plate at the center point of the control plate through a ball bearing. A center of the damper spring may be spaced apart from the end of the control plate by a first distance. The center of the damper spring may be spaced apart from the center point of the control plate by a second distance shorter than the first distance.

In one embodiment, the control plate may have a horizontal surface and an inclined surface. A force acting on the damper spring may vary according to a trajectory shape of the inclined surface of the control plate.

In one embodiment, the force acting on the damper spring may have a maximum value at the center point and linearly decrease from the center point to the end point.

In one embodiment, the control plate may extend at a first inclination angle in an inward direction from the end point to a first point, extend horizontally from the first point to a second point, and extend at a second inclination angle in an outward direction from the second point to the center point. The force acting on the damper spring may linearly increase from the center point to the first point, have a maximum value from the first point to the second point, and linearly decrease from the second point to the end point.

In one embodiment, the second coupling portion may be formed in a curved rail structure in one axial direction, the delivery robot traveling in the one axial direction. The first insertion portion may be coupled to the lower region of the upper plate, one side end and an opposite side end of the second coupling portion having the curved rail structure are coupled to an inner region of the upper plate. The upper plate, the first insertion portion, and the second coupling portion may be integrally coupled to constitute an upper plate assembly.

In one embodiment, the delivery robot may further include a controller configured to adjust the inclination angle of the upper plate when the delivery robot accelerates, decelerates, or passes through an inclined area during travel. Based on that it is determined that a level of a liquid in a bowl will rise to or above a threshold level as the delivery robot accelerates, decelerates, or passes through the inclined area, the controller controls the inclination angle of the upper plate with respect to the lower plate to reduce the level of the liquid.

In one embodiment, based on that the inclined area is sensed in a surrounding area recognized by a camera provided in the delivery robot, the controller may adjust the inclination angle of the upper plate to a first angle with respect to the lower plate before entering the inclined area. Based on that the delivery robot enters the inclined area, the controller may adjust the inclination angle of the upper plate to a second angle greater than the first angle.

In one embodiment, based on that the delivery robot accelerates in one axial direction, the controller may be configured to control the upper plate to rotate along a rail on a central plate in the one axial direction, and to control the upper plate to move in a direction opposite to the direction of the acceleration. The second coupling portion may constitute the central plate.

In one embodiment, based on that the delivery robot travels accelerates in another axial direction perpendicular to the one axial direction, the controller may be configured to control a central plate to rotate along a rail on the lower plate in the other axial direction, and to control the central plate to move in a direction opposite to the direction of the acceleration.

In one embodiment, the damper spring may include a first damper spring and a second damper spring, the first damper spring and the second damper spring being symmetrically arranged in the other axial direction with respect to the center point. The control plate may include a first control plate disposed at an outer end of the first damper spring, and a second control plate disposed at an outer end of the second damper spring.

In one embodiment, the damper spring may include a first damper spring and a second damper spring, the first damper spring and the second damper spring being symmetrically arranged in the other axial direction with respect to the center point. The control plate may include a first control plate disposed at an inner end of the first damper spring, and a second control plate disposed at an inner end of the second damper spring. Each of the first control plate and the second control plate may have a horizontal surface and an inclined surface. The horizontal surface of the first control plate and the horizontal surface of the second control plate may be coupled to contact each other.

### Advantageous Effects

Embodiments that address the above-mentioned needs are provided.

According to an embodiment of the present disclosure, a delivery robot may include a soup-spill prevention module having a tray structure.

According to an embodiment of the present disclosure, an upper plate and a lower plate of the delivery robot may operate independently, thereby stabilizing a bowl containing a liquid such that the liquid does not spill.

According to an embodiment of the present disclosure, the delivery robot may prevent vibrations from causing soup to spill when passing over obstacles, as well as by inertia generated during acceleration/deceleration.

According to an embodiment of the present disclosure, the delivery robot may maintain or even increase the traveling speed thereof above a certain level, even when passing over obstacles or during acceleration/deceleration.

According to an embodiment of the present disclosure, a soup-spill prevention module of the delivery robot may be configured to form a trajectory that enables curvilinear motion and an internal structure that stabilizes the movement of the liquid inside the bowl.

According to an embodiment of the present disclosure, the soup-spill prevention module of the delivery robot may stabilize the movement of the liquid inside the bowl by generating centrifugal force through a swing-like motion.

According to an embodiment of the present disclosure, the soup-spill prevention module of the delivery robot may use a damping control plate to reduce the effect of friction and adjust the degree of damping based on a distance, thereby allowing the upper and lower plates to move stably.

### BRIEF DESCRIPTION OF THE DRAWINGS

FIG. 1 is a configuration diagram illustrating a delivery system.
FIGS. 2A to 4 are diagrams illustrating examples of the travel area of a delivery robot.
FIG. 5 is a perspective view illustrating a delivery robot according to an embodiment of the present disclosure.
FIG. 6 illustrates the structure of trays on which items may be placed in the delivery robot of FIG. 5.
FIGS. 7A and 7B show cross-sectional views of the tray structure of FIG. 6 along the direction of one axis and the direction of the other axis, respectively.
FIG. 7C is a block diagram illustrating a delivery robot implemented with a soup-spill prevention module according to the present disclosure.
FIG. 8A illustrates the coupling structure between a damper spring and a control plate according to the present disclosure.
FIG. 8B is a side perspective view illustrating the damper spring and control plate of FIG. 8A coupled to each other.
FIG. 8C illustrates the force acting according to the length of the control plate with respect to the central position of the damper spring in FIG. 8A and the displacement of the damper spring over time.
FIG. 9 is a conceptual diagram illustrating how to prevent a liquid inside a bowl from spilling according to the acceleration/deceleration direction.
FIG. 10A illustrates a tray structure of a delivery robot configured to move a plate in the opposite direction according to acceleration or deceleration along one axis and the other axis.
FIG. 10B illustrates a structure that moves along a curved trajectory to maintain the liquid inside in a stable state during acceleration/deceleration of FIG. 10A.
FIG. 11 shows a side view and a bottom perspective view of an integrated coupling structure of a soup-spill prevention module formed to prevent the inflow of external foreign substances according to the present disclosure.
FIGS. 12A and 12B illustrate the force applied to a damper spring based on the shape of the control plate and the position of the damper spring according to embodiments.
FIG. 13 illustrates a structure in which a control plate is disposed at the center portion of the module according to the present disclosure.

### DETAILED DESCRIPTION

Hereinafter, embodiments disclosed herein will be described in detail with reference to the accompanying drawings. Wherever possible, the same reference numbers will be used to refer to the same or like parts, and redundant descriptions thereof will be omitted. In addition, in describing the embodiments disclosed in this specification, detailed descriptions of related known technologies may be omitted to avoid obscuring the gist of the embodiments disclosed herein.

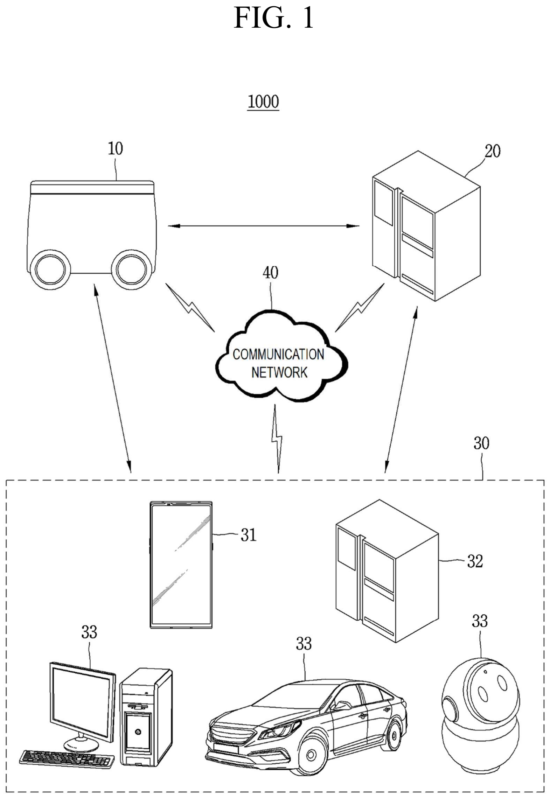

FIG. 1 is a configuration diagram illustrating a delivery system. As shown in FIG. 1, the delivery system 1000 includes a delivery robot (DR) 10 that autonomously travels within a travel area, and a control server 20 that is communicatively connected to the DR over a communication network 40 to control the operation of the DR. In this regard, the DR may include both an indoor delivery robot configured to deliver items indoors and an outdoor delivery robot configured to deliver items outdoors. In addition, the DR may include a serving robot that serves ordered food in a restaurant.

The delivery system 1000 may further include one or more communication devices 30 that are communicatively connected to at least one of the DR and the control server 20 to transmit and receive information to and from the at least one of the DR and the control server 20.

The DR may be an intelligent robot capable of automatically performing or operating assigned tasks by its own capability. Examples of such an intelligent robot include an Automated Guided Vehicle (AGV), which is a transport device that moves using sensors, magnetic fields, or vision devices on the floor, or a guide robot that provides information to users in airports, shopping malls, or hotels.

The DR may include a driving unit having an actuator or a motor to perform various physical operations such as moving robot joints. For example, the DR may autonomously travel within the travel area. The term "autonomous travel" refers to a technology that enables self-driving, and the DR may be an autonomous vehicle (robot) that travels with no or minimal user operation. The autonomous travel may include all technologies such a technology for maintaining a driving lane, a technology for automatically controlling speed, such as adaptive cruise control, a technology for automatically traveling along a predetermined route, and a technology for automatically determining a route and traveling toward a designated destination.

To perform such autonomous travel, the DR may employ artificial intelligence (AI) and/or machine learning. Through the AI and/or machine learning, the DR may autonomously travel within the travel area and perform various operations. For example, the robot may execute operations according to instructions specified by the control server 20 or perform self-exploration/monitoring operations.

The AI and/or machine learning technologies applied to the DR are described in detail below.

Artificial Intelligence (AI) refers to a field of study that researches artificial intelligence itself or methodologies for creating such intelligence. Machine Learning (ML) refers to a subfield of artificial intelligence that defines various problems and studies methodologies for solving the same. The machine learning is a technology that collects and learns large-scale information based on at least one algorithm, and then judges and predicts information based on the learned data. Learning of information refers to an operation of identifying the features, rules, and criteria of information, quantifying the relationships between pieces of information, and predicting new data using the quantified patterns. Machine learning is also defined as an algorithm that improves performance on a given task through continuous experience.

Algorithms used in machine learning may be based on statistics and may include, for example, a decision tree that uses a tree structure as a predictive model, an artificial neural network that mimics the structure and function of a neural network of a living creature, genetic programming based on evolutionary algorithms of living creatures, clustering that distributes observed examples into subsets called clusters, and the Monte Carlo method, which calculates function values probabilistically using randomly generated numbers. As a subfield of machine learning, there is also deep learning technology, which uses artificial neural network algorithms to perform at least one of learning, judging, or processing information.

An artificial neural network (ANN) may represent all models used in machine learning that are composed of artificial neurons (nodes) connected via synapses, forming a network capable of solving problems. The artificial neural network may have a structure that connects layers and transfers data between the layers. Such deep learning technology may use a graphic processing unit (GPU) optimized for parallel computation to learn a vast amount of information through an artificial neural network.

An ANN may be defined by connection patterns between neurons of different layers, a learning process for updating model parameters, and an activation function for generating output values. The ANN may include an input layer, an output layer, and optionally one or more hidden layers. Each layer may include one or more neurons. The ANN may include a synapse connecting neurons. In the ANN, each neuron may output a value of an activation function based on input signals, weights, and biases. Model parameters, determined through learning, include a weight for synaptic connection and a neuron bias. Hyper-parameters are parameters that need to be set before training in a machine learning algorithm and include a learning rate, number of iterations, mini-batch size, and initialization function.

The purpose of learning in an ANN may be viewed as determining model parameters that minimize a loss function. The loss function may be used as a metric to determine the optimal model parameters during the training process of the ANN.

Machine learning may be classified into supervised learning, unsupervised learning, and reinforcement learning, depending on the learning approach.

Supervised learning may refer to a method of training an ANN with labels for training data provided, wherein the labels may represent the correct answers (or output values) that the ANN is supposed to infer when the training data are input to the ANN. Unsupervised learning may refer to a method of training an ANN without labels for training data provided. Reinforcement learning may refer to a learning method in which an agent defined within a certain environment is trained to select an action or a sequence of actions that maximize cumulative rewards in each state.

Machine learning implemented through a deep neural network (DNN) that includes multiple hidden layers among ANNs is called deep learning. Deep learning is part of machine learning. Hereinafter, the term "machine learning" will be used as a concept including deep learning.

Although the DR may be implemented without the application of AI and/or machine learning technology, the following description focuses primarily on implementations with AI and/or machine learning technology.

The travel area in which the DR operates may be an indoor or outdoor space. The robot may operate in an area partitioned by walls or columns. In such cases, the operating area of the DR may be set differently depending on the design purpose, task characteristics, mobility of the robot, and other factors. The DR may also operate in open areas that are not predefined. In addition, the DR may determine its own operating area by sensing the surrounding environment, which may be achieved through AI and/or machine learning technologies applied to the DR.

The DR and the control server 20 may be communicatively connected over the communication network 40 to transmit and receive data. Each of the DR and the control server 20 may also transmit and receive data to and from the communication device 30 over the communication network 40. Here, the communication network 40 may refer to a communication network that provides a communication environment for communication devices through wired or wireless means. For example, it may be an LTE/5G network. That is, the DR may transmit and receive data to and from the control server 20 and/or the communication device 30 over the LTE/5G network 50. In this case, the DR and the control server 20 may communicate via a base station connected to the communication network 40, or they may also communicate directly without the assistance of the base station. In addition, the communication network 40 may employ not only the LTE/5G network but also other mobile communication standards or communication methods, which may be, for example, one or more of GSM (Global System for Mobile Communication), CDMA (Code Division Multi Access), CDMA2000 (Code Division Multi Access 2000), EV-DO (Enhanced Voice-Data Optimized or Enhanced Voice-Data Only), WCDMA (Wideband CDMA), HSDPA (High Speed Downlink Packet Access), HSUPA (High Speed Uplink Packet Access), LTE (Long Term Evolution), and LTE-A (Long Term Evolution-Advanced).

The communication network 40 may include connections between network elements such as hubs, bridges, routers, switches, and gateways. The communication network 40 may include one or more interconnected networks such as a public network (e.g., the Internet) or a private network (e.g., a secure enterprise intranet), forming a multi-network environment. Access to the communication network 40 may be provided through one or more wired or wireless access networks. Furthermore, the communication network 40 may support various IoT (Internet of Things), IoE (Internet of Everything), or IoST (Internet of Small Things) communications between distributed components including things for processing.

The DR may perform an operation within the travel area and provide information or data related to the operation to the control server 20 over the communication network 40. For example, the DR may provide the control server 20 with information about the location of the DR and the operation being performed. In addition, the DR may receive information or data related to the operation from the control server 20 over the communication network 40. For example, the control server 20 may provide the DR with information related to the control of the travel operation of the DR.

The DR may also provide the status information or data thereabout to the control server 20 over the communication network 40. Here, the status information may include information related to the location of the DR, the battery level, durability of components, and replacement cycles of consumables. Accordingly, the control server 20 may control the DR based on the information received from the DR.

One or more communication services may be provided to the DR over the communication network 40, and one or more communication platforms may also be provided through the communication services. For example, the DR may communicate with a communication target using at least one of Enhanced Mobile Broadband (eMBB), Ultra-Reliable and Low Latency Communications (URLLC), and Massive Machine-Type Communications (mMTC).

The communication device 30 may refer to any device and/or server capable of communicating with one or more of the DR and the control server 20 using various communication methods, including the communication network 40. For example, the communication device 30 may include one or more of a mobile terminal 31, an information providing system 32, and an electronic device 33.

The mobile terminal 31 may be a communication terminal capable of communicating with the DR and the control server 20 over the communication network 40. The mobile terminal 31 may include portable devices such as a cellphone, a smartphone, a wearable device (for example, a smartwatch, a smart glass, or a head-mounted display (HMD)), a laptop computer, a digital broadcasting terminal, a personal digital assistant (PDA), a portable multimedia player (PMP), a navigation device, a slate PC, a tablet PC, and an ultrabook.

The information providing system 32 may refer to a system that stores and provides one or more of information reflected in the travel area, information related to the travel area, or information related to the operation of the delivery system 1000. The information providing system 32 may be linked with the DR and the control server 20. It may be a system (server) that provides data and services to the DR and the control server 20. The information providing system 32 may include one or more systems (servers) capable of communication connection and information exchange with the DR and the control server 20. For example, the information providing system 32 may include one or more of a database system, a service system, and a central control system. Specific examples of the information providing system 32 may include the service system of the manufacturer of the DR, the service system of the manufacturer of the control server 20, the central (management) control system of a building corresponding to the travel area, the service system of an energy supplier providing energy to the building corresponding to the travel area, the information system of the construction company of the building corresponding to the travel area, the service system of the manufacturer of the mobile terminal 20, the service system of a telecommunications company providing communication services over the communication network 40, and the service system of a developer of an application applied to the delivery system 1000. The information providing system 32 may further include any other system that can be linked with the delivery system 1000.

The information providing system 32 may provide various services and/or information to electronic devices including the DR, the control server 20, the mobile terminal 31, and the electronic device 33. The information providing system 32 may be implemented in the cloud and may include multiple servers. It may perform AI-related computations that are difficult or time-consuming for the DR and the mobile terminal 31 to process, thereby generating AI-related models, and may provide related information to the DR and the mobile terminal 31.

The electronic device 33 may be a communication device capable of communicating with one or more of the DR and the control server 20 using various communication methods, including the communication network 40, within the travel area. For example, the electronic device 33 may include one or more of facilities/equipment such as a personal computer, a home appliance, a wall pad, an air conditioner, an elevator, an escalator, a light, a control device thereof, a power meter, an energy control device, an autonomous vehicle, and a home robot. The electronic device 33 may be connected wirelessly or by wire to one or more of the DR, the control server 20, the mobile terminal 31, and the information providing system 32.

The communication device 30 may share the role of the control server 20. For example, the communication device 30 may acquire information or data from the DR and provide the same to the control server 20, or may acquire information or data from the control server 20 and provide the same to the DR. The communication device 30 may also perform at least a portion of the analysis performed by the control server 20 and provide the analysis results to the control server 20. Additionally, the communication device 30 may simply output the analysis results, information, or data received from the control server 20. Furthermore, the communication device 30 may substitute for the role of the control server 20.

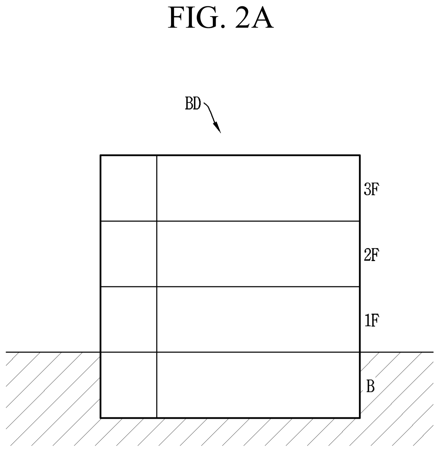

In the delivery system 1000 described above, the DR may travel within the travel area. In this regard, FIGS. 2A to 4 are diagrams illustrating examples of the travel area of the delivery robot.

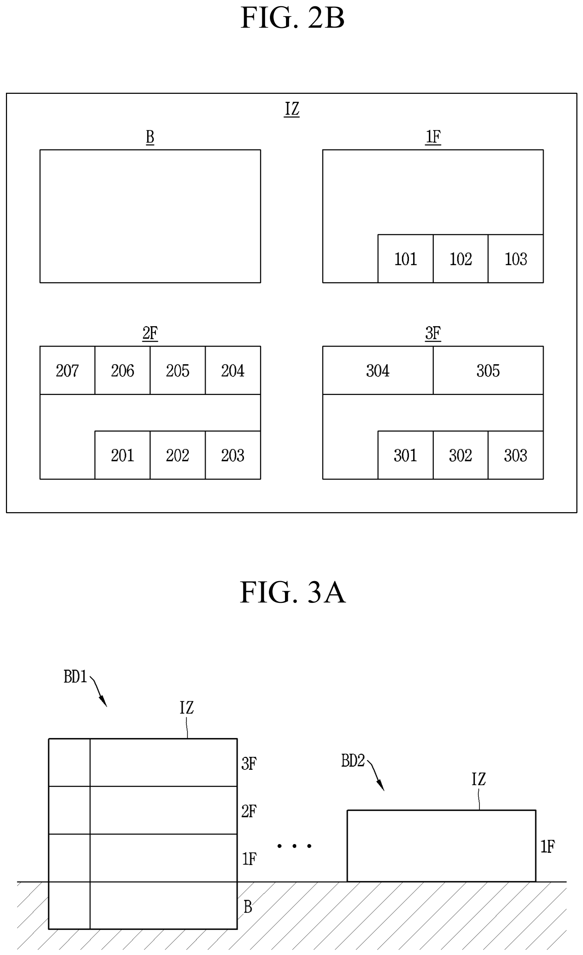

As shown in FIGS. 2A and 2B, the travel area may include at least a portion of an indoor zone IZ of a building BD having one or more floors. That is, the DR may travel through at least a portion of the indoor zone IZ of a building having one or more floors. For example, the first and second floors of a building having a basement and first to third floors may be included in the travel area, allowing the DR to travel on both the first and second floors of the building.

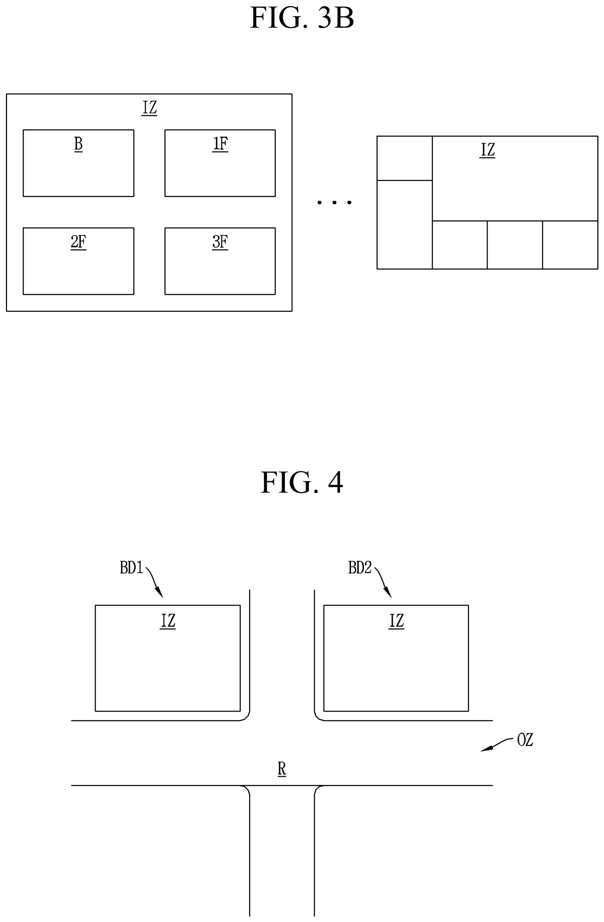

As shown in FIGS. 3A and 3B, the travel area may further include at least a portion of indoor zones IZ of multiple buildings (BD1 and BD2). That is, the DR may travel through at least a portion of the indoor zones IZ of multiple buildings BD1 and BD2 each of which has multiple floors. For example, the basement and first to third floors of a first building and the first floor of a second building, which is a single-story building, may be included in the travel area, allowing the DR to travel through the basement and first to third floors of the first building and the first floor of the second building.

As shown in FIG. 4, the travel area may further include an outdoor zone OZ of the one or more buildings BD1 and BD2. That is, the DR may travel through the outdoor zone OZ of the one or more buildings BD1 and BD2. For example, the surroundings of one or more buildings and movement paths to the one or more buildings may be further included in the travel area, allowing the DR to travel around the one or more buildings and along the movement paths leading to the one or more buildings.

The delivery system 1000 may be a system in which a delivery service is performed through the DR within the travel area. In the delivery system 1000, the DR may autonomously travel through the travel area, including indoor and outdoor zones, to perform specific operations. For example, the DR may carry an item by moving from one point to a specific point within the travel area. That is, the DR may perform a delivery operation of delivering the item from one point to the specific point. Accordingly, a delivery service may be provided through the DR within the travel area.

Hereinafter, the detailed configuration of the DR will be described with reference to the drawings. In this regard, the delivery robot may include both an indoor delivery robot that delivers items indoors and an outdoor delivery robot that delivers items outdoors. In addition, the delivery robot may include a serving robot that serves ordered food in restaurants.

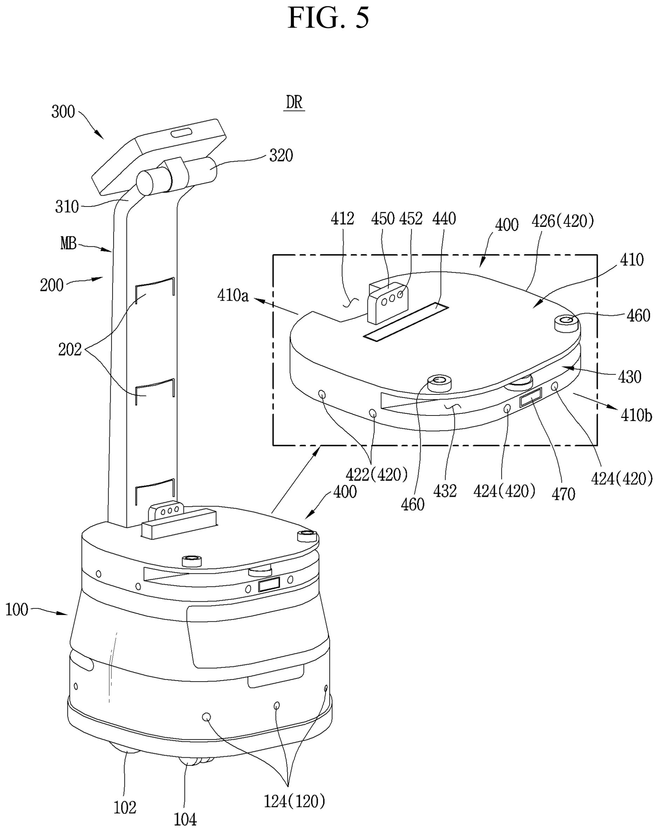

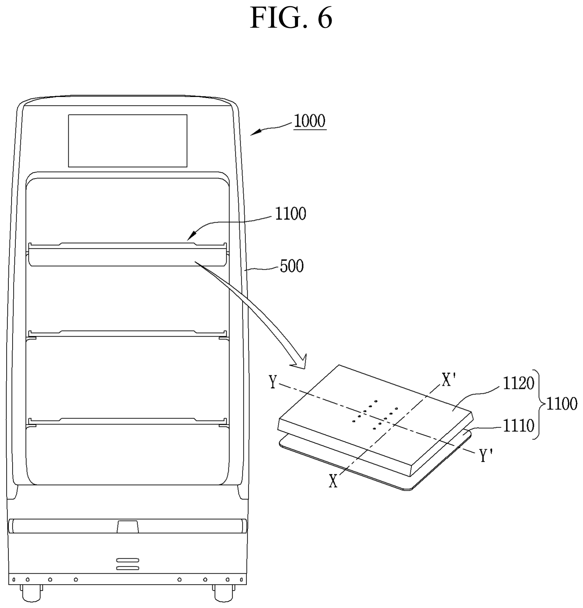

FIG. 5 is a perspective view illustrating a delivery robot according to an embodiment of the present disclosure, and FIG. 6 illustrates the structure of trays on which items may be placed in the delivery robot of FIG. 5.

Referring to FIGS. 5 and 6, a DR 1000 according to an embodiment of the present disclosure includes a main body MB, a coupling module 410, a module body 410, and a fastening unit 500.

The main body MB is configured to move relative to the ground. Specifically, the main body MB includes a moving unit 100 including wheels 102 and 104 provided on a lower portion thereof, allowing movement relative to the ground. The moving unit 100 may include a first wheel 102 providing main driving power and a second wheel 104 enabling steering and rotation.

The first wheel 102 may move the main body MB forward or backward. That is, the first wheel 102 may move the main body MB in a direction in which an extension part 200 extends and in a direction opposite to the direction in which the extension part 200 extends.

The first wheel 102 may be larger than the second wheel 104. The first wheel 102 is not configured to turn. The first wheel 102 may move the main body MB forward or backward by rotation. Accordingly, the first wheel 102 may provide main driving power in the traveling direction of the main body MB.

The second wheel 104 may be configured to enable the main body MB to rotate.

Specifically, referring to the figures, the second wheel 104 may be relatively smaller than the first wheel 102. The second wheel 104 is configured to turn. Accordingly, when the main body MB needs to turn during travel, the angle of the second wheel 104 changes, allowing the main body MB to turn. The second wheel 104 may change the traveling direction of the main body MB or rotate the main body MB in place during travel.

When the main body MB and the tray 50 are coupled and placed in a narrow space, the second wheel 104 may allow the main body MB and the tray 50 to turn in the narrow space, for example, in an elevator.

The moving unit 100 may include a coupling part (not shown) and a TOF camera 120. Specifically, the coupling part may be disposed on a top surface and formed such that the coupling module 410 may be coupled thereto. The coupling part may have a detachable structure corresponding to the coupling module 410 or may fix the coupling module 410 using a spring or the like. Alternatively, the coupling part may fix the coupling module 410 to the top surface of the moving unit 100 using screws or the like. Once the coupling module 410 is coupled to the top surface of the moving unit 100, it may provide a flat top surface relative to the ground.

The TOF camera 120 may be disposed on a lateral surface of the moving unit 100. It may include multiple cameras arranged at intervals along the circumference of the lateral surface. Referring to FIGS. 5 and 6, the TOF camera 120 may be disposed on the front, front-side, and rear surfaces of the moving unit 100. Specifically, the TOF camera 120 of the moving unit 100 may include a front TOF camera and a rear TOF camera 124.

The TOF camera 120 may be disposed on the lateral surface of the main body MB such that the distance between the main body MB and the ground is not long. Specifically, the height at which the TOF camera 120 is installed is within a range of about 5 cm to 15 cm from the ground. Using the TOF camera 120, the main body MB may identify the distance to nearby objects.

The moving unit 100 may include a main body LiDAR unit 110 disposed above the TOF camera 120 facing forward.

Specifically, referring to FIGS. 5 and 6, a main body LiDAR groove 112 is formed in the moving unit 100 facing forward. The main body LiDAR unit 110 capable of detecting objects in front of the main body MB is disposed is disposed in the main body LiDAR groove 112,.

The main body LiDAR unit 110 may have a detection range of about 180 degrees toward the front side. Together with a module LiDAR unit 430 of a coupling module 410, which is described later, the main body LiDAR unit 110 may detect all areas around the main body MB.

In addition, the main body LiDAR unit 110, together with the TOF camera 120, may collect data obtained by measuring the distance to objects around the main body MB.

The main body MB may include an extension unit 200 extending from one end of the moving unit 100 in one direction, and a display 300 extending from an end of the extension unit 200 at a predetermined angle with respect to the extension unit 200.

Referring to FIGS. 5 and 6, the extension part 200 extends vertically from the top surface of the moving unit 100. The extension part 200 may be disposed at the center of one side of the moving unit 100. In this case, the area where the extension part 200 is disposed may be the front surface of the moving unit 100.

The extension part 200 may include a camera unit 220 and a speaker 210 disposed on the front surface thereof. The extension part 200 may further include a engagement portion 202 disposed on the rear surface of the extension part 200.

First, the camera unit 220 is formed on the front surface of the extension part 200. The camera unit 220 may include a camera capable of capturing the terrain in front thereof. Unlike the TOF camera 120 and the main body LiDAR unit 110, the camera unit 220 may identify height differences in terrain and the height of objects.

The camera unit 220 may identify terrains and surrounding objects at different heights. Accordingly, the DR may utilize the information obtained from the camera unit 220 in setting a travel path.

The speaker 210 may output sound to the outside. Through the speaker 210, the DR may output information such as the current status of the DR, user guide messages, or messages intended for pedestrians.

The engagement portion 202 may be formed by cutting out a part of the case of the extension part 200 on the rear side of the extension part 200. Specifically, the engagement portion 202 may be formed by cutting three straight lines that are perpendicular to one another in the case of the extension part 200. As a result, the upper portion of the case of the extension part 200 may be spread apart by a predetermined distance, allowing at least one of the coupling module 410 and the tray 50 to be fixed within the spread region.

The display 330 may be configured to display the status of the main body MB and output a screen through which the main body MB can be controlled.

An inclined portion 310 extends from the extension part 200 at a predetermined angle to support the display 330. The inclined portion 310 positions the display 330 at an angle such that the display may be easily viewed from above.

An angle adjuster 320 is provided to allow fine adjustment of the angle of the display 330. Using the angle adjuster 320, a user may adjust the angle of the display 330 within a certain range to comfortably view the display 330.

The DR according to an embodiment of the present disclosure may provide strong driving power in the forward and backward directions through the first wheel 102 of the moving unit 100. Steering and rotation may be enabled by the moving unit 100 including the second wheel 104.

In addition, the DR according to the present disclosure may provide recognition of the front and rear directions through the extension part 200 disposed on one side of the moving unit 100. The DR may also recognize the distance and height of surrounding objects through the LiDAR unit and TOF camera 120 of the moving unit 100 and the camera unit 220 of the extension part 200.

The DR according to the present disclosure may also be easily operated by a user through the display 300.

The coupling module 400 may be arranged on one surface of the main body MB in a coupling manner. Specifically, the coupling module 400 may be arranged on the top surface of the moving unit 100 of the main body MB in a coupling manner. The coupling module 400 may include a module body 410 and a docking portion 450. Multiple module TOF cameras 420 may be disposed on the lateral surface of the module body 410, spaced apart from each other along a circumference of the module body.

The module body 410 may include a module LiDAR unit 430 formed to face rearward and capable of scanning the rear side of the main body MB. The docking portion 450 may include a docking TOF camera 452 arranged facing rearward of the main body MB. The module body 410 may include a rolling pin 460 arranged to rotate.

Hereinafter, a delivery robot including a soup-spill prevention module having a tray structure according to the present disclosure will be described. In this regard, the delivery robot may include both an indoor delivery robot that delivers items indoors and an outdoor delivery robot that delivers items outdoors. The delivery robot may also include a serving robot that serves ordered food in restaurants.

According to an embodiment of the present disclosure, a delivery robot having a soup-spill prevention module having a tray structure may be provided. The present disclosure is intended to provide a delivery robot having a soup-spill prevention module that prevents liquids from spilling when delivering various foods such as dishes containing soup or coffee or water in cups, depending on the traveling environment. The present disclosure is also intended to provide a delivery robot having a soup-spill prevention module capable of preventing soup overflow caused by vibrations when passing over obstacles, as well as by inertia generated during acceleration/deceleration. Further, the present disclosure is intended to provide a delivery robot having a soup-spill prevention module capable of preventing soup overflow issues even when the traveling speed is above a certain level, without reducing the traveling speed of the delivery robot.

The tray structure of the delivery robot shown in FIGS. 5 and 6 may be implemented with multiple plates, and bowls containing liquid may be disposed on an upper plate. The tray structure of the delivery robot may be implemented as a soup-spill prevention module configured to prevent liquid from spilling from the bowls.

Specifically, FIG. 6 shows a delivery robot having a soup-spill prevention module implemented in a tray structure, and the upper and lower plates of the soup-spill prevention module. Referring to FIG. 6, a soup-spill prevention module 1100 having a tray structure may be disposed inside the delivery robot 1000. The soup-spill prevention module 1100 may include a lower plate 1110 and an upper plate 1120.

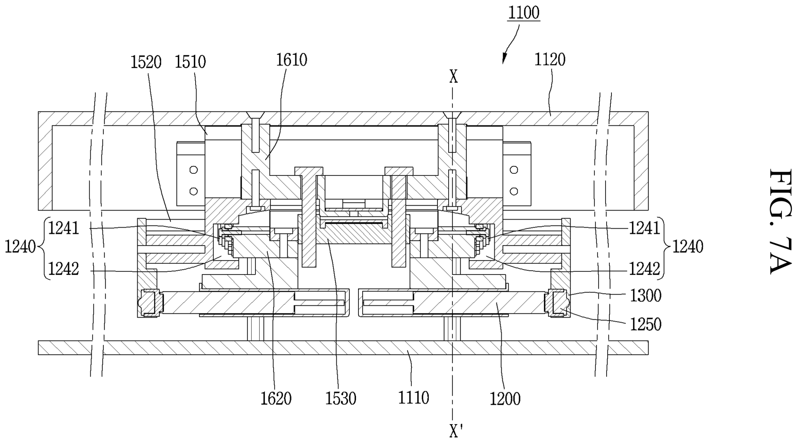

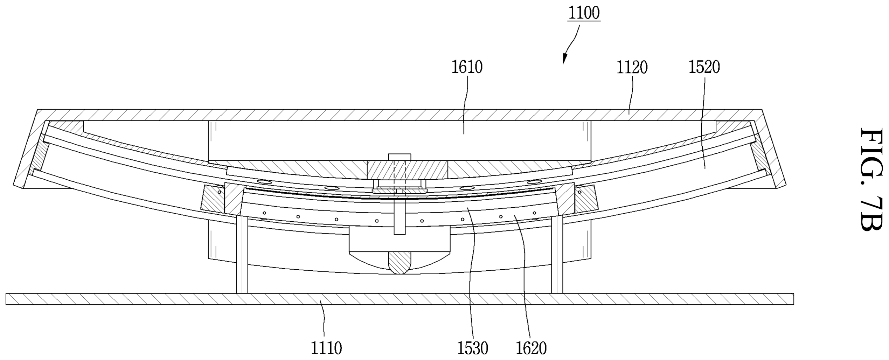

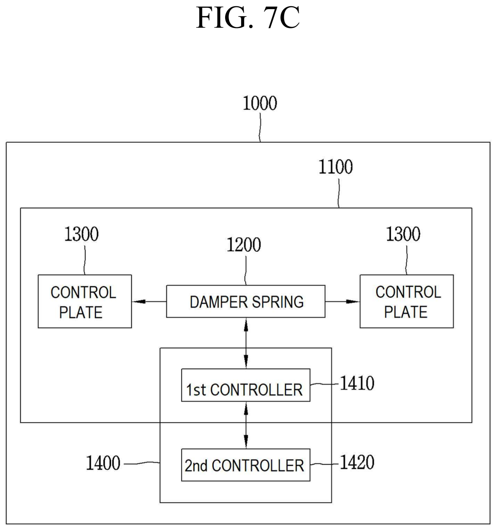

In this regard, FIGS. 7A and 7B show cross-sectional views of the tray structure of FIG. 6 along the direction of one axis and the direction of the other axis, respectively. FIG. 7A shows a cross-sectional view taken along the X-X' line, which extends in the the direction of one axis, and FIG. 7B shows a cross-sectional view taken along the Y-Y' line, which extends in the direction of the other axis. FIG. 7C is a block diagram illustrating a delivery robot implemented with a soup-spill prevention module according to the present disclosure.

FIG. 7A shows a cross-sectional view of the soup-spill prevention module 1100 including the lower plate 1110 and the upper plate 1120, taken along the Y-Y' line of FIG. 6. Referring to FIG. 7A, the lower plate 1110 may be operatively coupled with a damper spring 1120. The upper plate 1120 may be operatively coupled with multiple coupling portions 1510, 1520, and 1530. The coupling portions 1510, 1520, and 1530 may be formed in a flat, linear structure along the Y-Y' direction. The coupling portions 1510, 1520, and 1530 may be referred to as a first coupling portion 1510, a second coupling portion 1520, and a third coupling portion 1530, respectively.

An insertion portion 1610 may be inserted between the coupling portions 1510 and 1520, and an insertion portion 1620 may be inserted between the coupling portions 1520 and 1530. The insertion portions 1610 and 1620 may be referred to as a first insertion portion 1610 and a second insertion portion 1620, respectively. The insertion portion 1610 may be coupled to the upper plate 1120 through screws at different points, referred to as a first point and a second point, on an upper portion of the insertion portion. The coupling portion 1520 may be coupled to the insertion portion 1610 through screws at different points, referred to as a third point and a fourth point, on a lower portion of the insertion portion 1610. The third point may be formed along the same line as the first point, and the fourth point may be formed along the same line as the second point.

The damper spring 1200 may be coupled to a control plate 1300 through a ball bearing 1250. The damper spring 1200 may move along a trajectory formed on the control plate 1300. As the damper spring 1200 moves, the upper plate 1120 may move independently of the lower plate 1110.

FIG. 7B shows a cross-sectional view of the soup-spill prevention module 1100 including a lower plate 1111 and an upper plate 1112, taken along line X X' of Figure 6. FIG. 7B shows a cross-sectional view taken along the X-X' line that connects points offset from the central point of the soup-spill prevention module 1100 in FIG. 7A.

Referring to FIGS. 7A and 7B, the insertion portion 1610 may be inserted through the coupling portion 1510. The insertion portion 1610 may extend to the rear surface of the upper plate 1120. The lower region of the insertion portion 1610 may be coupled to the coupling portion 1520.

The coupling portion 1530 may be disposed between the first insertion portion 1610 and the second insertion portion 1620. The coupling portion 1530 may be positioned in the inner region of the coupling portion 1520. As the soup-spill prevention module 1100 accelerates or decelerates in one direction, the damper spring 1200 may be configured to move along a curved sliding trajectory. In this regard, the ball bearing 1250 coupled to an end of the damper spring 1200 may move along the curved sliding trajectory formed on the lower control plate 1302. Accordingly, when the delivery robot accelerates, decelerates, or passes through an inclined area, the upper plate may be driven to tilt in the direction opposite to the incline direction.

Referring to FIG. 7C, the delivery robot 1000 may include the soup-spill prevention module 1100. The soup-spill prevention module 1100 may include a damper spring 1200, a control plate 1300, and a first controller 1410. The control plate 1300 may be operably coupled to the damper spring 1200. As the damper spring 1200 moves along the curved trajectory formed on one surface of the control plate 1300, the upper and lower plates of the soup-spill prevention module 1100 may move independently.

The controller 1400 may be configured to control the soup-spill prevention module 1100 and the delivery robot 1000 including the same. The controller 1400 may include a first controller 1410 and a second controller 1420. The first controller 1410 may be disposed in the inner region of the soup-spill prevention module 1100. The first controller 1410 may function as a drive controller that controls the upper and lower plates and internal components of the soup-spill prevention module 1100. The second controller 1420 may be disposed in the outer region of the soup-spill prevention module 1100 and may be configured to control the behavior of the soup-spill prevention module 1100 based on the operation of the delivery robot 1000.

Referring to FIGS. 5 to 7C, the delivery robot 1000 may include the lower plate 1110, the upper plate 1120, the damper spring 1200, and the control plate 1300. The delivery robot may further include the controller 1400. One of the lower plate 1110 and the upper plate 1120 may be referred to as a first plate, and the other as a second plate. The control plate 1300, which adjusts the degree of damping of the damper spring 1200, may be referred to as a damping control plate. The control plate 1300 may be referred to as a third plate.

The lower plate 1110 may be fixed to the delivery robot. The lower plate 1110 may be coupled to the engagement portion 202 of the DR and fixed to an internal structure of the DR. The upper plate 1120 may be configured to support an item disposed thereon. The lower plate 1110 and the upper plate 1120 may be operably coupled to each other through a plurality of coupling members and insertion members.

The damper spring 1200 may be fixed to the lower plate 1110. The control plate 1300 may be fixed to the upper plate 1120. The control plate 1300 may be coupled to an end of the damper spring 1200 to control the degree of damping. Accordingly, the control plate 1300 may be referred to as a damping control plate.

The tray structure of the DR may include one or more coupling and insertion portions. The tray structure of the DR may further include a first coupling portion 1510, a first insertion portion 1610, and a second coupling portion 1520. The tray structure may further include a second insertion portion 1620 and a third coupling portion 1530.

The first coupling portion 1510 may be couple to the lower region of the upper plate 1120. The first insertion portion 1610 may be arranged to be inserted at a first point and a second point of the first coupling portion 1510. The first point and second point of the first coupling portion 1510 may be symmetrically formed with respect to the center of the first coupling portion 1510. The second coupling portion 1520 may be coupled to the first coupling portion 1510 on one side and the opposite side of the first coupling portion 1510.

The second insertion portion 1620 may be inserted into the inner region of the second coupling portion 1520. The third coupling portion 1530 may be disposed between the first insertion portion 1610 and the second insertion portion 1620, and one side and the opposite side of the third coupling portion 1530 may be coupled to the second insertion portion 1620.

The second insertion portion 1620 may be coupled to the second coupling portion 1520 at lateral regions on one side and the opposite side through side ball bearings 1240. The side ball bearings 1240 may include an upper ball bearing 1241 in an upper region and a lower ball bearing 1242 in a lower region.

The upper plate 1120, which supports a bowl, and the lower plate 1110, which is fixed to the DR may behave independently. In this regard, the controller 1400 may adjust the tilt angle of the upper plate 1120 as the robot accelerates, decelerates, or moves through an inclined area.

As the ball bearings 1240 are divided into the upper ball bearing 1241 and the lower ball bearing 1242 to be positioned to be supported on the second coupling portion 1520, which is a fixed frame, the rail structure may be formed in a curved arc shape rather than a straight line shape. A ball bearing guide may be added to use the ball bearings 1240. The tray structure, which includes multiple plates and coupling members, may be a modular structure and may implemented in various positions and sizes.

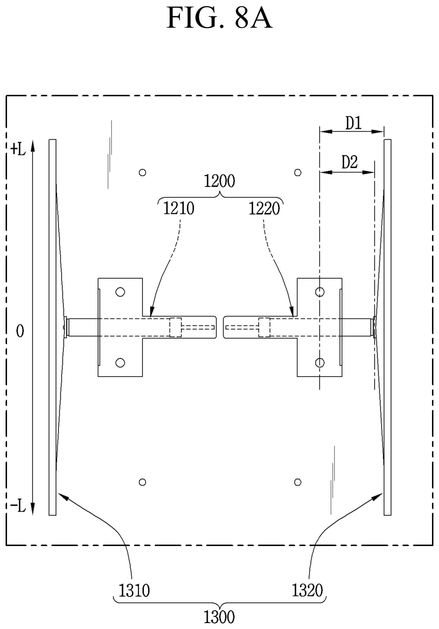

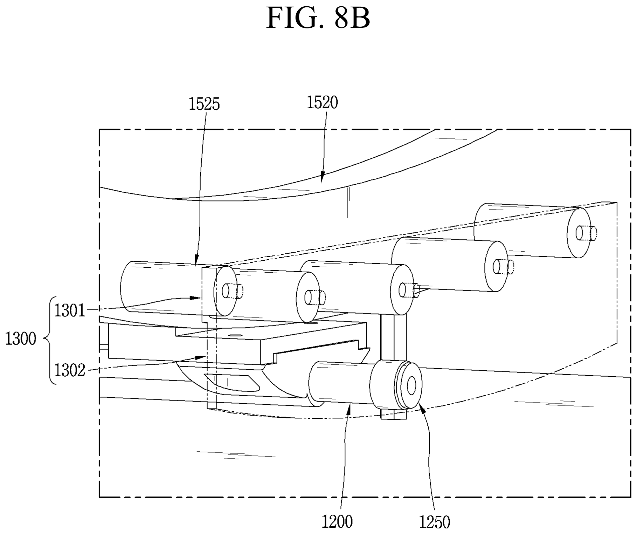

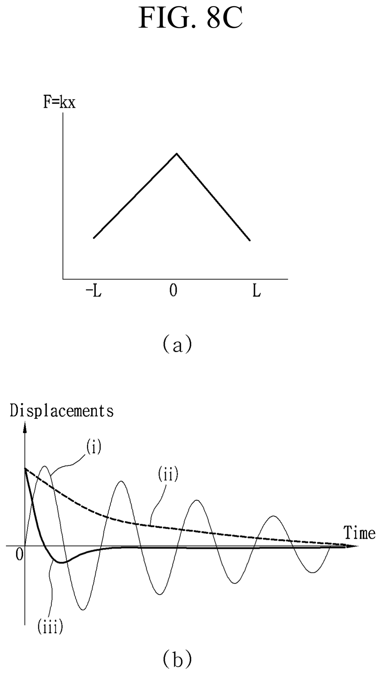

The principle of control of the degree of damping through the coupling structure of the damper spring and control plate according to the present disclosure will now be described. In this regard, FIG. 8A illustrates the coupling structure between a damper spring and a control plate according to the present disclosure. FIG. 8B is a side perspective view illustrating the damper spring and control plate of FIG. 8A coupled to each other. FIG. 8C illustrates the force acting according to the length of the control plate with respect to the central position of the damper spring in FIG. 8A and the displacement of the damper spring over time.

Referring to FIGS. 7A to 8A, the control plate 1300 may be formed as an inclined surface in the direction of the other axis. The end of the damper spring 1200 may be coupled to the center point of the control plate 1300 through the ball bearing 1250. The distance between the center of the damper spring 1200 and the control plate 1300 along the other axis may differ between the center and end points. The distance from the center of the damper spring 1200 to the end point of the control plate 1300 may be a first distance D1. The distance from the center of the damper spring 1200 to the center point of the control plate 1300 may be a second distance D2 shorter than the first distance D1. Accordingly, the upper plate 1120 may move at different tilt angles with respect to the lower plate 1110 depending on the distance between the damper spring 1200 and the control plate 1300.

The damper spring 1200 may be fixed to the lower plate 1110, and the control plate 1300 may be fixed to the upper plate 1120. Since the control plate 1300 is formed as an inclined surface, there may be a distance difference (D1-D2) between the damper spring 1200 and the control plate 1300. The force F acting on the damper spring 1200 is proportional to the compression distance within the elastic deformation range. Thus, the modulus may increase as the position approaches the center and decrease as the position is shifted away from the center. The force F may be determined by multiplying the spring constant k of the damper spring 1200 by the displacement x of the damper spring 1200.

Referring to FIGS. 7A to 8B, the ball bearing 1250 at the end of the damper spring 1200 may be coupled to the control plate 1300. A plurality of coupling structures 1525 formed on the second coupling portion 1520 corresponding to the center plate may be coupled to the control plate 1300.

The control plate 1300 may include an upper control plate 1301 corresponding to an upper region and a lower control plate 1302 corresponding to a lower region. The upper control plate 1301 and the lower control plate 1302 may be integrally connected to each other.

The difference in distance between the damper spring 1200 and the control plate 1300 may adjust the damping coefficient of the damper spring 1200, thereby controlling the force applied to the damper spring 1200. Because the trajectory of the damper spring 1200 is a curve, the control plate 1300 may also be formed in a curved shape. The ball bearing 1250 may be disposed at the end of the damper spring 1200 to allow the damper spring 1200 to smoothly move.

The ball bearing 1250 may have three degrees of freedom to allow smooth movement along the curved trajectory. Alternatively, when a ball bearing with fewer degrees of freedom is used, the shaft that fixes the bearing may be configured to rotate. In this regard, a separate rotational structure may be required to use a ball bearing rotating with only one degree of freedom on a curved trajectory. As another example, when no bearing is used, the end of the damper spring 1200 may be formed in a spherical shape to minimize friction with the control plate 1300.

The multiple coupling structures 1525 formed on the second coupling portion 1520 may be coupled to the upper control plate 1301. The end of the damper spring 1200 may be coupled to the lower control plate 1302 through the ball bearing 1250. The lower control plate 1302 may be formed thinner than the upper control plate 1301. Thereby, the displacement of the damper spring 1200 may be maximized. The ball bearing 1250 coupled to the end of the damper spring 1200 may move along a curved path formed in the lower control plate 1302. Accordingly, as the DR accelerates, decelerates, or passes through an inclined area, the upper plate may be driven to tilt in the direction opposite to the incline.

Referring to FIGS. 7A to 8C, the damper spring 1200 may include a horizontal surface and an inclined surface. The force acting on the damper spring 1200 may vary depending on the shape of the trajectory of the inclined surface of the control plate 1300. The force acting on the damper spring 1200 may reach a maximum at the central point of the damper spring 1200 and decrease linearly from the central point toward the end point.

Referring to FIG. 8B-(b), (i) when the decrease in the displacement of the damper spring over time is below a first threshold level, it may be considered light damping. (ii) When the decrease in the displacement of the damper spring is between the first threshold level and a second threshold level, it may be considered hard damping. (iii) When the decrease in the displacement of the damper spring exceeds the second threshold level, it may be considered critical damping.

Without the control plate for controlling damping, the upper plate may operate as in light damping, and thus the frictional force and the change in the force acting on the damper spring may cause displacement attenuation. Therefore, as shown in FIG. 7B, when moving along a curved trajectory, the damping ratio may be adjusted by controlling the frictional force and the force acting on the spring, allowing the tray structure including multiple plates in the delivery robot of FIG. 6 to move stably.

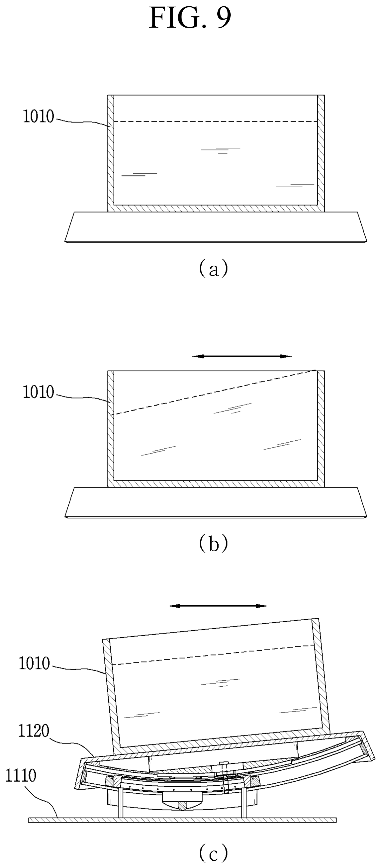

The tray structure of the delivery robot according to the present disclosure may be configured to prevent soup inside a bowl from spilling. Therefore, the tray structure of the delivery robot according to the present disclosure may also be referred to as a soup-spill prevention module. In this regard, FIG. 9 is a conceptual diagram illustrating how to prevent a liquid inside a bowl from spilling according to the acceleration/deceleration direction.

Referring to FIG. 9-(a), when the traveling speed or the degree of acceleration/deceleration of the delivery robot is below a certain level and the tray structure of the delivery robot remains horizontal, the level of the liquid 1020 inside the bowl 1010 may also remain at a constant level.

Referring to FIG. 9-(b), when the traveling speed or the degree of acceleration/deceleration of the delivery robot exceeds a certain level, the tray structure of the delivery robot may fail to remain horizontal. Accordingly, the liquid level 1020 inside the bowl 1010 may exceed a certain level, and in some cases, the liquid 1020 may spill out of the bowl 1010.

Referring to FIG. 9-(c), the tray structure corresponding to the soup-spill prevention module may be driven such that the upper plate 1120 tilts in the inclination direction of the liquid 1020. As a result, it may prevent the liquid 1020 inside the bowl 1010 from exceeding a certain liquid level and spilling out of the bowl 1010.

In a traveling environment where acceleration/deceleration occurs, the liquid level inside the bowl 1010 may not remain stable. When there is no acceleration/deceleration, the liquid inside the bowl 1010 may stay at a constant level. However, when acceleration/deceleration occurs, the liquid inside the bowl 1010 may tilt and spill out of the bowl 1010. In this regard, when the bowl 1010 is placed on the soup-spill prevention module, the upper plate 1120 moves, stabilizing the liquid level inside the bowl 1010. Therefore, the present disclosure allows the inner plates to move independently with respect to the inertial force caused by acceleration/deceleration occurring during travel, thereby maintaining the liquid inside the bowl 1010 in a stable state.

Referring to FIGS. 7A to 9, the controller 1400 may be configured to adjust the inclination angle of the upper plate 1120 as the delivery robot passes through areas of acceleration, deceleration, or slope during travel. The controller 1400 may determine whether the liquid level of the liquid 1020 in the bowl 1010 will exceed a critical level as the delivery robot passes through the areas of acceleration, deceleration, or slope during travel. When it determines that the liquid level of the liquid 1020 in the bowl 1010 will exceed the critical level, the controller 1400 may adjust the inclination angle of the upper plate 1120 relative to the lower plate 1110 or the ground plane. Thus, the controller 1400 may control the inclination angle of the upper plate 1120 to reduce the level of the liquid 1020.

In addition, the controller 1400 may partially pre-adjust the angle of the upper plate 1120 before entering a sloped area to prevent a sudden adjustment of the angle of the plate from degrading flow stability of the liquid. In this regard, the controller 1400 may sense a sloped area through a camera mounted on the delivery robot. When the sloped area is sensed, the controller 1400 may adjust the inclination angle of the upper plate 1120 to a first angle relative to the lower plate 1110 before entering the sloped area. Upon entering the sloped area, the controller 1400 may adjust the inclination angle of the upper plate 1120 to a second angle greater than the first angle.

Furthermore, the controller 1400 may partially pre-adjust the angle of the upper plate 1120 before acceleration/deceleration exceeds a threshold. Thereby, it may prevent a sudden adjustment of the angle of the plate from degrading flow stability of the liquid when the acceleration/deceleration exceeds the threshold. In this regard, the controller 1400 may sense the speed and/or acceleration using sensors provided on the delivery robot. When the acceleration exceeds a first threshold, the controller 1400 may adjust the inclination angle of the upper plate 1120 to the first angle relative to the lower plate 1110. When the acceleration exceeds a second threshold greater than the first threshold, the controller 1400 may adjust the inclination angle of the upper plate 1120 to the second angle greater than the first angle.

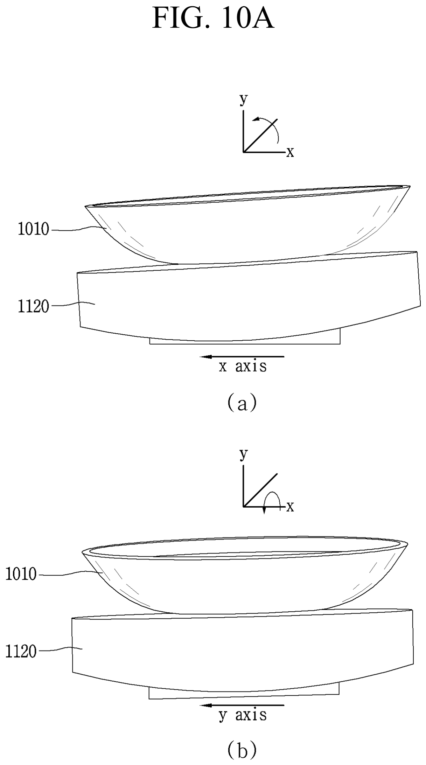

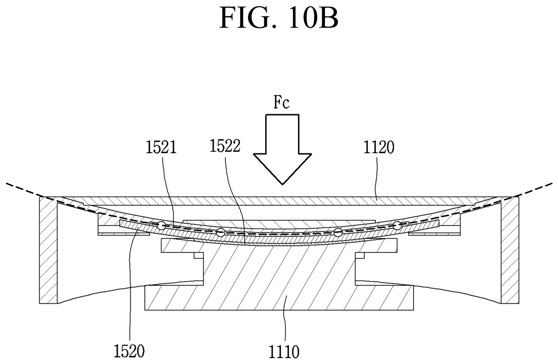

The tray structure of the delivery robot implemented with the soup-spill prevention module according to the present disclosure may be configured to move the plates in the opposite direction of acceleration occurring along the direction of one axis and the other axis to maintain the balance. In this regard, FIG. 10A illustrates a tray structure of a delivery robot configured to move a plate in the opposite direction according to acceleration or deceleration along one axis and the other axis. FIG. 10B illustrates a structure that moves along a curved trajectory to maintain the liquid inside in a stable state during acceleration/deceleration of FIG. 10A.

Referring to FIG. 10A-(a), the bowl 1010 may be placed on the upper plate 1120 that accelerates/decelerates along the X-axis. When acceleration occurs along the X-axis, the upper plate 1120 rotates along the rail of the central plate and moves in the direction opposite to the acceleration.

Referring to FIG. 10A-(b), the bowl 1010 may be placed on the upper plate 1120 that accelerates/decelerates along the Y-axis. When acceleration occurs along the Y-axis, the central plate rotates along the rail of the lower plate 1110 and moves in the direction opposite to the acceleration.

In an environment where acceleration/deceleration occurs along both the X-axis and Y-axis, the driving structure of FIGS. 10A-(a) and 1010A-(b) may operate independently and simultaneously along the X-axis and Y-axis. Referring to FIG. 10A, the upper/central/lower plates of the soup-spill prevention module may be implemented to slide along linear paths along the X-axis and Y-axis.

Referring to FIG. 10B, the plates inside the module may behave to attenuate inertial force caused by vibration and acceleration/deceleration occurring during travel. In this regard, a centrifugal force Fc may act on the upper region of the upper plate 1120. The central plate 1520 may maintain the liquid inside the plate in a stable state by moving along a curved trajectory instead of performing a simple linear motion to attenuate the force. Ball bearing guide plates 1521 and 1522 guiding the ball bearings may be disposed on the upper and lower sides of the central plate 1520.

Referring to FIGS. 7A to 10B, when the delivery robot accelerates along the direction of one axis in which it travels, the controller 1400 may control the upper plate 1120 to rotate along the rail of the central plate 1520 in the direction of the one axis. The controller 1400 may control the upper plate 1120 to move in the direction opposite to the acceleration. In this regard, the second coupling portion 1520 of FIG. 7B may constitute the central plate 1520 of FIG. 10B.

When acceleration occurs in a direction of another axis perpendicular to the one axis, the controller 1400 may control the central plate 1520 to rotate along the rail of the lower plate 1110 in the direction of the other axis. The controller 1400 may control the central plate to move in the direction opposite to the acceleration occurring in the direction of the other axis.

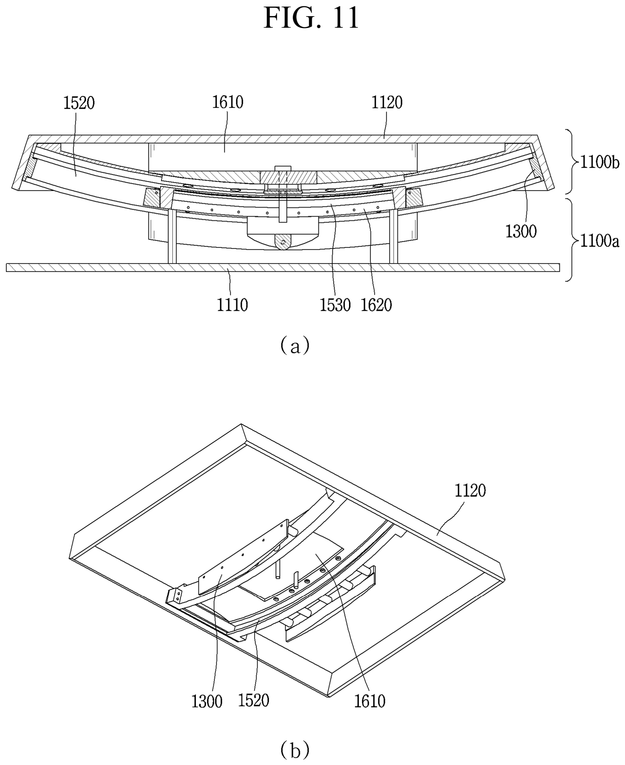

The tray structure of the delivery robot implemented with the soup-spill prevention module according to the present disclosure may be formed as an integrated coupling structure to prevent the inflow of external foreign substances. In this regard, FIG. 11 shows a side view and a bottom perspective view of an integrated coupling structure of a soup-spill prevention module formed to prevent the inflow of external foreign substances according to the present disclosure.

Since the tray structure of the delivery robot primarily delivers liquid products, it may be easily contaminated by foreign substances. When foreign substances enter the drive unit, the reliability of the operation of the delivery robot may decrease. Therefore, in the present disclosure, the upper plate 1120 may be integrated with the curved rail structure to block the entry of external foreign substances.

Referring to FIG. 11-(a), the soup-spill prevention module of the delivery robot may include a lower plate assembly 1100a and an upper plate assembly 1100b. Referring to FIG. 11-(b), one side and the opposite side of the second coupling portion 1520 of the curved rail structure may be coupled to the control plate 1300, allowing the structure to maintain balance even during acceleration/deceleration through movement along a curved trajectory.

Referring to FIGS. 7A to 11, the second coupling portion 1520 may be formed as a curved rail structure extending in the direction of one axis in which the delivery robot travels. The first insertion portion 1610 may be coupled to the lower region of the upper plate 1120. One side end and the opposite side end of the second coupling portion 1520 of the curved rail structure may be coupled to the inner region of the upper plate 1120. The one side end and the opposite side end of the second coupling portion 1520 may be provided with a concave structure. The concave structure of the second coupling portion 1520 may be coupled to the upper plate 1120 through a convex structure.

The lower plate 1110 and the damper spring 1200 may constitute the lower plate assembly 1100a. The upper plate 1120, the first insertion portion 1610, and the second coupling portion 1520 may be integrally combined to constitute the upper plate assembly 1100b.

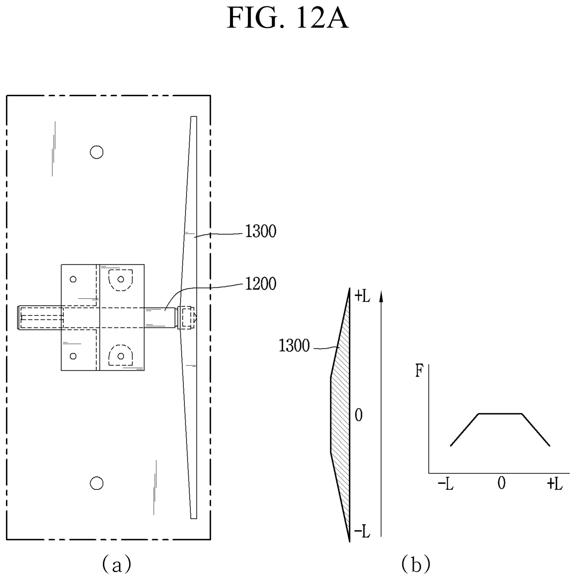

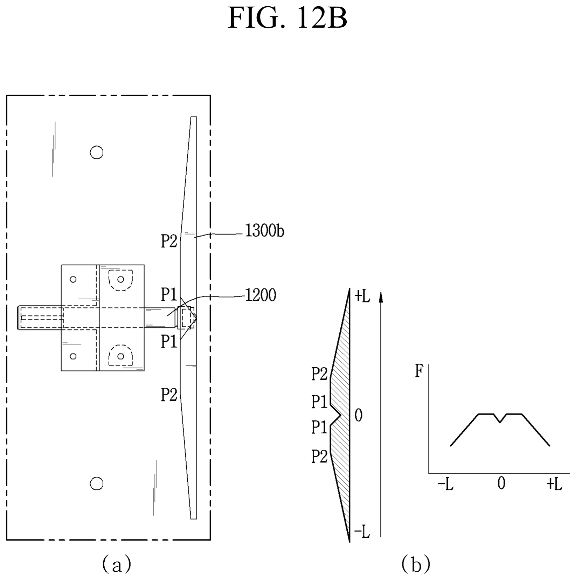

The damping control plate according to the present disclosure may control the characteristics of travel of the delivery robot through various shapes and arrangement structures. In this regard, FIGS. 12A and 12B illustrate the force applied to a damper spring based on the shape of the control plate and the position of the damper spring according to embodiments.

Referring to FIG. 12A-(a), the center of the control plate 1300 may be coupled to an end of the damper spring 1200. The control plate 1300 may have an inclined surface on one side and a horizontal surface on the opposite side. Referring to FIGS. 12A-(a) and 12A-(b), as the inclined surface of the control plate 1300 is formed at a predetermined angle, the force acting on the damper spring decreases linearly as the distance from the center point of the damper spring increases.

Referring to FIG. 12B-(a), the center of the control plate 1300b may be coupled to the end of the damper spring 1200, and the control plate 1300b may have a concave structure from the center to first points P1. The control plate 1300b may have a horizontal structure from the first points P1 to second points P2. The control plate 1300b may have an inclined structure from the second points P2 to the end points thereof.

Referring to FIGS. 12B-(a) and 12B-(b), the control plate 1300b may have an angle of inward inclination from the end point to the first point P1. The control plate 1300b may have a horizontal section from the first point P1 to the second point P2. The control plate 1300b may have an angle of outward inclination from the second point P2 to the center point.

The force acting on the damper spring 1200 may linearly increase from the center point to the first point P1. The force acting on the damper spring 1200 may reach a maximum value in a section from the first point P1 to the second point P2. The force acting on the damper spring 1200 may linearly decrease from the second point P2 to the end poi0nt.

Referring to FIGS. 12A and 12B, the contact surface between the end of the damper spring 1200 and the control plate 1300, 1300b corresponds to the rolling surface. The damping value may vary depending on the trajectory shape of the rolling surface. The center portion of the rolling surface may be flattened to make the force acting on the damper spring 1200 constant, thereby controlling the movement in that section. The center portion of the rolling surface may be formed to be concave such that the control plate 1300, 1300b may more be accurately positioned at the center. Furthermore, the trajectory of the rolling surface of the control plate 1300, 1300b may be variously shaped to expand the travel scope of the delivery robot and optimize the travel characteristics.

In the soup spill prevention structure of the delivery robot according to the present disclosure, the control plate may be arranged in various configuration structures. Referring to FIGS. 8A, 12A, and 12B, the control plate may be arranged on the side portions. The damper spring 1200 may include a first damper spring 1210 and a second damper spring 1220 symmetrically arranged in the direction of the other axis with respect to the center point. The control plate 1300, 1300b may include a first control plate 1310 disposed at the outer end of the first damper spring 1210 and a second control plate 1320 disposed at the outer end of the second damper spring 1220.

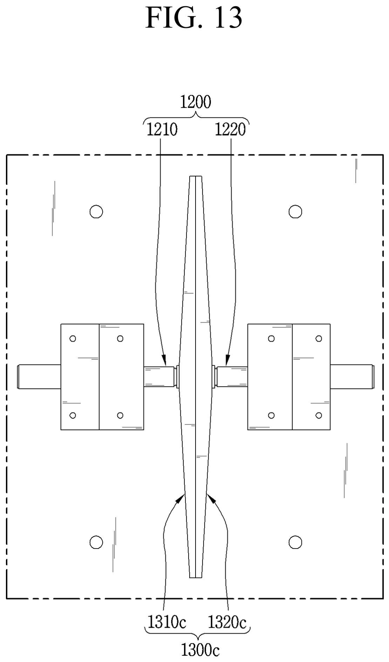

The control plate may be disposed at the center portion of the soup-spill prevention module of the delivery robot according to the present disclosure. In this regard, FIG. 13 illustrates a structure in which a control plate is disposed at the center portion of the module according to the present disclosure.

Referring to FIG. 13, the damper spring 1200 may include a first damper spring 1210 and a second damper spring 1220 symmetrically arranged in the direction of the other axis with respect to the center point. The control plate 1300c may include a first control plate 1310c disposed at the inner end of the first damper spring 1210 and a second control plate 1320c disposed at the inner end of the second damper spring 1220. Each of the first control plate 1310c and the second control plate 1320c may include a horizontal surface and an inclined surface. The plates may be coupled such that the horizontal surface of the first control plate 1310c contacts the horizontal surface of the second control plate 1320c.

The tray-structure delivery robot according to the present disclosure has been described above. The technical effects of the tray-structure delivery robot according to the present disclosure may be summarized as follows, but are not limited thereto.

According to an embodiment of the present disclosure, a delivery robot may include a soup-spill prevention module having a tray structure.

According to an embodiment of the present disclosure, an upper plate and a lower plate of the delivery robot may operate independently, thereby stabilizing a bowl containing a liquid such that the liquid does not spill.

According to an embodiment of the present disclosure, the delivery robot may prevent vibrations from causing soup to spill when passing over obstacles, as well as by inertia generated during acceleration/deceleration.

According to an embodiment of the present disclosure, the delivery robot may maintain or even increase the traveling speed thereof above a certain level, even when passing over obstacles or during acceleration/deceleration.

According to an embodiment of the present disclosure, a soup-spill prevention module of the delivery robot may be configured to form a trajectory that enables curvilinear motion and an internal structure that stabilizes the movement of the liquid inside the bowl.

According to an embodiment of the present disclosure, the soup-spill prevention module of the delivery robot may stabilize the movement of the liquid inside the bowl by generating centrifugal force through a swing-like motion.

According to an embodiment of the present disclosure, the soup-spill prevention module of the delivery robot may use a damping control plate to reduce the effect of friction and adjust the degree of damping based on a distance, thereby allowing the upper and lower plates to move stably.

The additional scope of applicability of the present disclosure will become apparent from the above detailed description. Various modifications and changes within the spirit and scope of the present disclosure will be readily apparent to those skilled in the art. Therefore, the detailed description of the disclosure and specific embodiments such as and the preferred embodiments of the present disclosure are to be understood as illustrative examples only.

## Claims

1. A delivery robot comprising:
a lower plate arranged to be fixed to the delivery robot;
an upper plate arranged to support an item placed thereon;
a damper spring fixed to the lower plate; and
an control plate coupled to an end of the damper spring to control damping of the damper spring,
wherein the control plate is provided with an inclined surface such that a distance between a center of the damper spring and the control plate differs between a center point and an end point of the control plate,
wherein the upper plate moves at a different inclination angle with respect to the lower plate depending on the distance between the center of the damper spring and the control plate.

2. The delivery robot of claim 1, further comprising:
a first coupling portion coupled to a lower region of the upper plate;
a first insertion portion inserted into first and second points of the first coupling portion and having a lower region connected thereto; and
a second coupling portion coupled to the first coupling portion in one side region and an opposite side region of the first coupling portion.

3. The delivery robot of claim 2, further comprising:
a second insertion portion inserted into an inner region of the second coupling portion; and
a third coupling portion disposed between the first insertion portion and the second insertion portion and having one side region and an opposite side region coupled to the second insertion portion.

4. The delivery robot of claim 3, wherein the second insertion portion is coupled to the second coupling through side ball bearings in one side region and an opposite side region thereof,
wherein the side ball bearings comprise an upper ball bearing in an upper region and a lower ball bearing in a lower region.

5. The delivery robot of claim 1, wherein the end of the damper spring is coupled to the control plate at the center point of the control plate through a ball bearing,
wherein:
a center of the damper spring is spaced apart from the end of the control plate by a first distance; and
the center of the damper spring is spaced apart from the center point of the control plate by a second distance shorter than the first distance.

6. The delivery robot of claim 5, wherein the control plate has a horizontal surface and an inclined surface,
wherein a force acting on the damper spring varies according to a trajectory shape of the inclined surface of the control plate.

7. The delivery robot of claim 6, wherein the force acting on the damper spring has a maximum value at the center point and linearly decreases from the center point to the end point.

8. The delivery robot of claim 6, wherein the control plate extends at a first inclination angle in an inward direction from the end point to a first point, extends horizontally from the first point to a second point, and extends at a second inclination angle in an outward direction from the second point to the center point,
wherein the force acting on the damper spring linearly increases from the center point to the first point, has a maximum value from the first point to the second point, and linearly decreases from the second point to the end point.

9. The delivery robot of claim 3, wherein the second coupling portion is formed in a curved rail structure in one axial direction, the delivery robot traveling in the one axial direction,
wherein the first insertion portion is coupled to the lower region of the upper plate, one side end and an opposite side end of the second coupling portion having the curved rail structure are coupled to an inner region of the upper plate,
wherein the upper plate, the first insertion portion, and the second coupling portion are integrally coupled to constitute an upper plate assembly.

10. The delivery robot of claim 3, further comprising:
a controller configured to adjust the inclination angle of the upper plate when the delivery robot accelerates, decelerates, or passes through an inclined area during travel,
wherein, based on that it is determined that a level of a liquid in a bowl will rise to or above a threshold level as the delivery robot accelerates, decelerates, or passes through the inclined area, the controller controls the inclination angle of the upper plate with respect to the lower plate to reduce the level of the liquid.

11. The delivery robot of claim 10, wherein, based on that the inclined area is sensed in a surrounding area recognized by a camera provided in the delivery robot, the controller adjusts the inclination angle of the upper plate to a first angle with respect to the lower plate before entering the inclined area,
wherein, based on that the delivery robot enters the inclined area, the controller adjusts the inclination angle of the upper plate to a second angle greater than the first angle.

12. The delivery robot of claim 10, wherein, based on that the delivery robot accelerates in one axial direction in which the delivery robot travels, the controller is configured to:
control the upper plate to rotate along a rail on a central plate in the one axial direction; and
control the upper plate to move in a direction opposite to the direction of the acceleration,
wherein the second coupling portion constitutes the central plate.

13. The delivery robot of claim 10, wherein, based on that the delivery robot travels in one axial direction and accelerates in another axial direction perpendicular to the one axial direction, the controller is configured to:
control a central plate to rotate along a rail on the lower plate in the other axial direction; and
control the central plate to move in a direction opposite to the direction of the acceleration.

14. The delivery robot of claim 13, wherein the damper spring comprises a first damper spring and a second damper spring, the first damper spring and the second damper spring being symmetrically arranged in the other axial direction with respect to the center point,
wherein the control plate comprises:
a first control plate disposed at an outer end of the first damper spring; and
a second control plate disposed at an outer end of the second damper spring.

15. The delivery robot of claim 13, wherein the damper spring comprises a first damper spring and a second damper spring, the first damper spring and the second damper spring being symmetrically arranged in the other axial direction with respect to the center point,
wherein the control plate comprises:
a first control plate disposed at an inner end of the first damper spring; and
a second control plate disposed at an inner end of the second damper spring,
wherein each of the first control plate and the second control plate has a horizontal surface and an inclined surface,
wherein the horizontal surface of the first control plate and the horizontal surface of the second control plate are coupled to contact each other.
